# EUROPEAN PATENT APPLICATION

(11) **EP 4 428 367 A1**
(43) Date of publication of application: **11.09.2024**
(21) Application number: 22890501.4
(22) Date of filing: 13.04.2022
(51) Int. Cl.: F04B 9/117, F15B 1/04, F04B 11/00, F04F 13/00

(54) **HYDRAULIC POWER BOOSTING SYSTEM**

(30) Priority: 03.11.2021 MX 2021013474
(71) Applicant: Olvera Alvarez, Bernadette, Juriquilla, Queretaro, 76230 (MX)
(72) Inventor: Olvera Alvarez, Bernadette, Juriquilla, Queretaro, 76230 (MX)
(74) Representative: Ibarra Garcia, Isabel
(86) International application number: PCT/MX2022/050036
(87) International publication number: WO 2023/080771

(57) **Abstract**

The present invention relates to a hydraulic power boosting system comprising: an energy source (an electric motor in this case), a hydraulic pump, a relief safety valve, hydraulic conductors, a liquid fluid tank, 4-way directional valves operated by servomotors and a digital/analogue control system in conjunction with the inductive proximity sensors located at the ends of the cylinders or boosters, two boosters or cylinders configured in series in the same line, each having an internal plunger that is displaced and also displaces the fluid contained in the cylinders or boosters linearly, and hydraulic actuators or motors that carry out the work converting the energy of the system. All these aforementioned elements constitute the main block, which serves as an energy source for the next secondary block, which contains the same elements as the main block except for the energy source (an electric motor in this case). Depending on the application, N number of blocks can be interconnected in series or in parallel.

## Description

### TECHNICAL FIELD OF THE INVENTION

The present invention relates to a hydraulic system the purpose of which is to increase the efficiency of the energy available in angular movement energy conversion systems to perform mechanical or pressure work and volume displacement.

### BACKGROUND OF THE INVENTION

Water has been used to provide power since times immemorial to perform work either as a mill or as a load carrier through channels and ditches. The application of the use of liquid fluids and their properties in more complex systems called hydraulic circuits began to be developed in line with the basis developed by Blaise Pascal. Today, the heaviest work in the construction, agricultural and manufacturing industry is carried out using liquid fluids and their properties. It should be borne in mind that, in addition to being practically incompressible, liquids are excellent power transmitters in energy conversion systems and that liquid fluids, unlike steel, are much more flexible in terms of adopting the shape of the vessel containing it, so any load applied at any point of the system will be replicated in the entire system with the same intensity and in equal areas, provided that the vessel containing it is completely closed and saturated with fluid.

As is known by man, hydraulic systems are so versatile that they can be used in almost all areas of industry and conversion, such as in the manufacturing, transport, electric energy generation, health, and food sectors, among others.

In the prior art, there are different systems and applications including among them conventional systems applied to presses, rolling machines, heavy machinery, etc. These typical systems consist of a normally angular energy source, a liquid fluid tank, valves, pumps, motors, pistons that carry out the work or conversion. These systems are not as efficient in terms of their energy consumption since the energy source is always stretched to its limit even at times when the system is not carrying out any work, so the energy source is used up to maintain a constant pressure and volume. These systems use a pressure-controlling valve with tank discharge when the system does not use pressure or volume, and the valve closes at the time of carrying out the work, allowing the pressurized liquid fluid to pass to the actuators.

In the prior art, there are pressure boosting systems called boosters which have the property of increasing the output pressure with respect to the input and can be placed in tandem, greatly increasing pressure, but reducing volume on the same scale. The final displacement thereof is therefore very limited, an example of which is the braking boosters of a vehicle, where the brake pedal advances several centimetres and the brake linings or braking device finally advance a few millimetres, but with great force.

In terms of an application of pressure boosting systems in electric energy generation, it is important to first know the systems used in this matter since electric energy production has very specific and precise characteristics in terms of a very stable angular displacement, since the electric energy must be a high-quality product in relation to its angular displacement, this must be constant and very specific at 60 Hz in the American continent and 50 Hz in Europe.

The prior art is highly deficient in this industrial area since its efficiencies range from 30% to a maximum of 65%. A conventional electric energy generation system has an efficiency of 30%, a combined cycle generation system of 50% up to 65%, a photovoltaic energy generation system of 20%, and a wind energy generation system of 40%. It is important to mention that 85% of electric energy is generated by burning fossil fuels which are finite and used in a wide variety of applications and products ranging from the health sector to the food sector, and to the manufacturing of all kinds of material goods.

According to the foregoing, the prior art includes patent document ES2009006A6, which describes a pressure generator made up of two pairs of hydraulic cylinders, the cylinders of each pair being linked at their ends by means of respective directional chambers closed with end covers, each of the chambers having therein a reel that is displaced due to the effect of pressure from directional valves actuated by means of solenoids that are activated by limit switches in the low-pressure cylinders, such that there is generated a high fluid pressure which reaches a connector and from which it departs to the corresponding hydraulic motor. However, said pressure generator delivered an energy conversion efficiency of up to 80%, since it uses a displacement gear pump and does not use a control system to control the directional changes of the plungers.

There is also document WO9202713A1, which describes a pressure generator that allows multiplying the pressure output by means of using sealed chambers that contain rod-free pistons that act on the fluid working as a force transmitter and concentrating the force on the frustoconical covers. At each end of the piston, due to the narrowing of the covers, the force is directed towards the directional valves which are housed at the ends of the piston and distribute the pressure in an orderly manner through the fluid conductors to the hydraulic motor. However, the present invention does not use logic control systems nor does it have liquid cooling systems, likewise the present system generally has an overall energy conversion efficiency of 90%.

There is also document WO9202713A1, which describes a hydraulic pressure intensifier coupled to a high-pressure hydraulic pump, which is driven by a hydraulic reciprocating drive apparatus in which a reciprocable low-pressure driving piston and a control valve system direct the fluid from a source of fluid under pressure alternately to the opposite sides of the low-pressure piston. The control valves system comprises separate valves of which one is adapted to be operable by pressure fluid and is arranged for reversing the action of the piston. The other valve is a pilot valve arranged for controlling the action of the reversing valve. The action of the reversing valve is stable and occurs over a relatively short period of time whereas the action of the pilot valve occurs at the speed of the movement of the low-pressure piston. A feature of the low pressure drive apparatus is the absence of dynamic seals in the reversing valve and the pilot valve. However, the present system lacks fluid cooling systems and does not specify the capacity of efficiencies in the transmission of hydrostatic work to another system, likewise, it does not indicate whether it could work in any way in coordination (in series or parallel) with other similar or identical pressure intensifiers, nor does it specify whether it is possible to accumulate in the same line the pressure accumulated from the use of previous hydraulic intensifiers.

Similarly, there is also document US2005133090, which relates to a hydraulic pressure intensifier that allows energy recovery, made up of semi-permeable membranes, presenting positive displacement with no valves and separate pumps or pump sets that move an unequal volume of fluid in a stable proportion within a shared circuit. The apparatus operates without the need for valves, cams, sliding fluid control parts, switches, timers, regulators, sensors, electrical or electronic circuits, or any other flow control, restriction and/or distribution means acting in a similar manner. It can be actuated by a variety of primary motors, such as rotating or ratchet connecting rods, wind turbines, water wheels, wave trackers, and motors, as well as by a relatively low-pressure fluid feed provided by built-in or external feed pumps or by any other means suitable for feeding fluid at low pressure. However, in the present system, it is not indicated whether it could work in any way in coordination (in series or parallel) with other similar or identical pressure intensifiers, nor does it specify whether it is possible to accumulate in the same line the pressure accumulated from the use of previous hydraulic intensifiers in the same way, the flow control, and therefore the permanence of pressure losses in the system are evident.

Therefore, the prior art does not disclose any hydraulic pressure intensifying system which allows efficiently harnessing energy from angular displacement systems for subsequent use in other systems which require carrying out some work up to 100% efficiency, which allows adding up the hydraulic pressure in the same line or pipe, does not present volume and pressure losses throughout the system, allows controlling the increase in temperature of the fluids when subjected to high pressure inside the system, operates at high frequencies (close to 60 Hz) continuously in order to be used in applications such as electric energy generation and other applications which require efficient energy transmission and work.

There is patent WO2020167108, which describes a high-efficiency energy conversion system, where the cylinders are connected in series by means of hydraulic connectors. Each cylinder or booster has a pressure control valve as a load at its outlet, which acts as a load for each cylinder in order to increase the output pressure in each booster cylinder and use that pressure to be applied to a final angular displacement hydraulic motor in charge of carrying out the work. It is important to mention that the cylinders are double-acting devices, and that, like the description of previous patents, they do not have steel rods to perform work, they only use a plunger located inside the cylinder which, due to effects of pressure, volume and directional control mechanisms, the plunger is displaced from one end of the cylinder to the other end and at the same time the plunger displaces the fluid located at the rear part of the plunger, converting the fluid into a hydraulic power transmitter by applying it in the form of pressure and volume that the power source and pump provide, so that the hydraulic actuator or motor will convert hydraulic energy into angular mechanical energy to perform work.

The plungers used in the system have perforations at their front ends without actually communicating with each other, so that when applying pressure and volume while the system is in operation, volume and pressure are stored in these perforations such that when the plunger reaches its limit displacement, either one end or the other, the directional change of the plunger is performed and at times there tends to be a pressure and volume loss, and it is at this moment that due to pressure differences, the volume and pressure stored in the perforations of the plunger are released and prevent temporary power loss during each directional change of the plunger.

It is important to mention that the cylinders or boosters use frustoconical-shaped covers at their ends to centre and direct the volume displaced by the plunger or plungers. This conical geometric shape of the covers is efficient to concentrate the stress in an area having a smaller volume and pressure. Due to the geometric shape of the covers, the fluid is displaced towards the smaller area in a turbulent manner which causes cavitation and affects the operating principle of the system. Gas bubbles generated by cavitation explode when they come into contact with the steel, releasing gases and increasing the structural wear of the internal elements of valves and actuators. The outlet for the fluid displaced by the plungers is located in the smaller diameter of the frustoconical covers of the cylinders, and there is connected to the outlet of each cover a two-way valve operated by external hydraulic control provided by the parallel directional change system to travel the inner reel of the valve, releasing or obstructing the outlet and allowing or obstructing the feeding of the ends of the cylinder. All of this combined with the limit sensors, a PLC, a power source and 4-way directional solenoid valves controls the directional changes of the plungers.

It is important to mention that the parallel hydraulic system of the directional change system uses a pressure accumulator the function of which is to store pressurized fluid and release it to the parallel work line to perform directional change in the shortest time possible.

There is connected to the rear outlet of the 2-way directional valves secured to the frustoconical covers a pressure control valve the purpose of which is to increase the outlet pressure on both sides of the cylinder when the fluid is displaced through the plunger and thus increase the pressure of the system such that if the system uses more than two cylinders, the last cylinder no longer uses a pressure control valve by way of a load because the load that corresponds to it is the hydraulic motor which has the function of converting hydraulic energy into angular mechanical energy to carry out work. Once the hydraulic motor has carried out the work, the fluid is returned to the tank to start a new cycle.

It should be mentioned that the parallel hydraulic system used to make directional changes tends to heat up the fluid, so it is necessary to connect a heat exchanger to the fluid tank return line in order to prevent excessive heating that may damage the composition of the fluid and ultimately affect the internal parts of the system, such as mechanical seals, pumps, actuators, conductors, etc.

In this patent, the direction of the plungers depends on both plungers, and the system will present faults when there is a phase difference between them.

### OBJECT OF THE INVENTION

Having analysed the operation of the pressure boosting devices identified in the prior art, the new invention coincides therewith in terms of the configuration of the cylinders configured in series for the purpose of increasing hydraulic pressure in the line connecting said cylinders and obtaining a high efficiency in the conversion of available energy, reaching an efficiency very close to 100%.

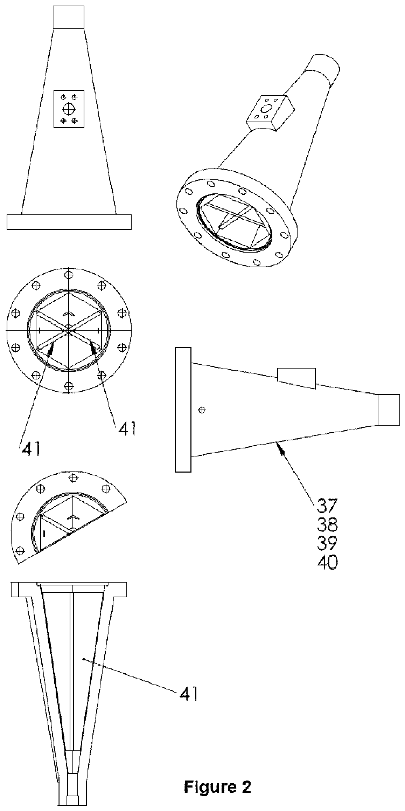

An object of the invention is to change the geometric shape of the covers, i.e., to replace the frustoconical shape since this shape creates turbulence in the liquid fluid when it is conducted to the outlet. In this invention, the covers have a pyramid shape made up of a simple polygon and triangles having a single side which is related to one of the base polygon, in addition to having an anti-cavitation system which consists of steel plates arranged along the cover, secured thereto. See Figure 2.

Another object of the present invention is to replace the two-way directional valves secured to the final part of the frustoconical covers with a single 4-way directional valve for each cylinder, said covers will control the inlet and outlet of each cylinder and work rotationally. This limits faults and reduces manufacturing costs.

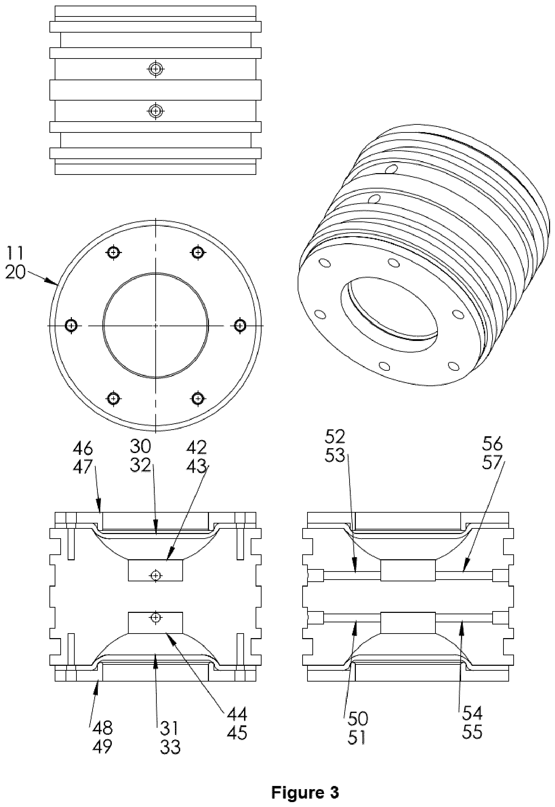

Another object of this invention is to modify the plungers, replacing the openings which store volume and pressure in order to release them in each directional change to prevent power losses. The volume and pressure released by the openings of the plunger are not sufficient to prevent perceptible power losses, so the openings are replaced in the present invention with a concave cavity on each face of the plunger, which uses a high pressure-resistant neoprene membrane serving as a seal to prevent the leakage of nitrogen previously placed in the concave cavity, such that when the plunger is displaced towards any end of the cylinders, the pressure that the fluid exerts on the membrane tends to press on the nitrogen, accumulating pressure and volume, after the membrane, with said pressure and volume being released during each directional change, preventing power losses due to directional changes since the volume and pressure stored in the concave area of the plunger is sufficient to prevent power losses. Figure 3 depicts the concave shape, the placement of the membrane, and the way to fill the space with nitrogen.

Another object of this invention is to replace the parallel hydraulic directional change system which causes faults, heating, and decreased efficiency with an electromechanical system consisting of servomotors, PLC, sensors, controller cards and the aforementioned 4-way directional valves with mechanical control in charge of controlling directional changes of the plungers by obstructing and freeing the outlets and inlets of the cylinders.

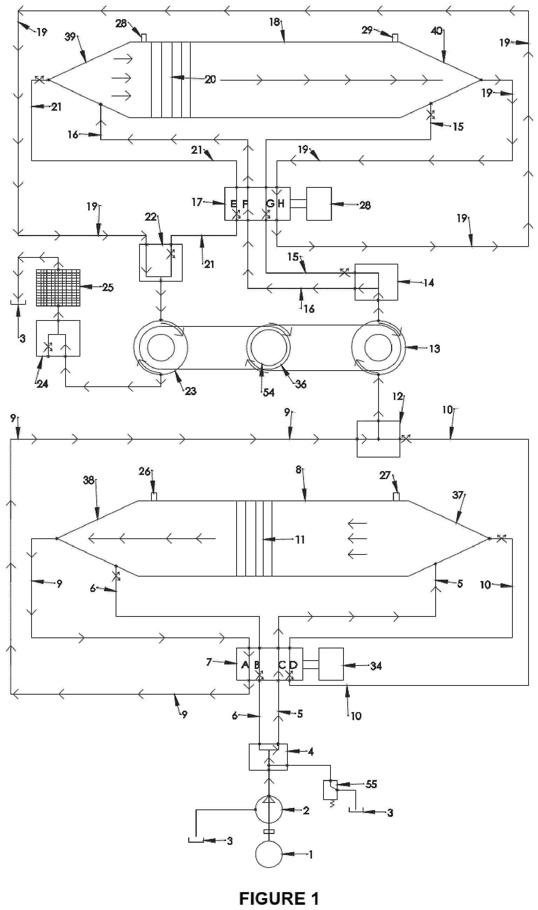

An object of the present invention is to replace the pressure-regulating valves described in patent number WO2020167108 and having the function of increasing the pressure in the system, with known hydraulic angular displacement actuators such as hydraulic motors, these hydraulic motors are connected to the outlet of each cylinder or booster after the 4-way directional valves, the hydraulic actuator or motor will serve as a load to increase the pressure in its respective booster or cylinder and convert the pressurized volume displaced by the plunger in angular displacement to carry out work, said motors being attached by a mechanical transmission for adding up the stresses of both hydraulic actuators, see Figure 1. This object of the present invention increases the efficiency of the system considerably since this new invention uses the pressure which the previous system wasted for compressing the spring of the pressure-controlling valve.

An object of this new invention is to replace the unidirectional drive coupling used in patent WO2020167108 to protect system integrity, the previous coupling used cams and pivots which, while working correctly, tended to break the pivots as a result of the very large momentum caused by the lever during the driving operation, so it was replaced with a drive coupling with helical cavities and submersible pivots pushed by springs with improved efficiency, eliminating the high momentums of the lever in the pivots during the driving operation.

As a result of its design and configuration, another object of this new invention is that it allows the plungers to have complete directional freedom by eliminating the dependency to which they were previously subjected to in terms of direction.

The aforementioned objectives are achieved with the high-efficiency hydraulic power boosting system. The system, being a hydraulic circuit, is formed by several elements, some being typical of a hydraulic circuit such as: an energy source which, in this case, is an electric motor; the system can also use other mechanical, chemical or electrical energy sources. In addition to the energy source, the system has a pump coupled to an energy source, the pump is connected to the fluid tank through the absorption port and the feed manifold is connected through the outlet port, hydraulic conductors emerge from this manifold to the 4-way directional control and feed valve, there is connected to the aforementioned manifold a safety valve calibrated to open before reaching a pre-calibrated maximum pressure, when the pressure exceeds the calibration, the valve opens and discharges into the tank. Feed lines connecting with the booster or cylinder in their side parts emerge from the 4-way valve, the lines for conducting the output flow to the 4-way valve are connected to the outlets of the booster at the ends, hydraulic conductors connecting with the hydraulic actuator or motor intake manifold are connected in the valve. In the outlet port of the hydraulic motor there is connected a manifold from which lines connecting with the second 4-way directional valve emerge, feed lines for the second booster or cylinder are connected to the outlet of the second valve. Output lines which are connected to the second valve are connected to the outlets of the booster at each end, the outlets of the second valve are connected to the hydraulic conduction lines until the manifold of the inlet port of the second hydraulic motor, the outlet port of the hydraulic motor is connected to the manifold (24) to conduct the fluid to the cooler system (25) and to be discharged into the tank (3) to then be used again in a new cycle.

This preceding description corresponds to a block; depending on the application, N number of blocks can be interconnected, although it is also possible to prepare a block with a single booster or cylinder and the necessary components thereof such as a hydraulic pump, a 4-way valve, relief valves, hydraulic conductors, hydraulic motors, a fluid tank, electronics, among others.

The 4-way valves described herein are rotationally actuated, unblocking and blocking the outlet and inlet ports thereof depending on the direction of the plunger inside the cylinder or booster by means of servomotors controlled by cards connected to a PLC, i.e., the inner reel which blocks and unblocks the ports is rotationally operated.

### BRIEF DESCRIPTION OF THE INVENTION

The hydraulic power boosting system which uses the physical principles of liquid fluids contained in a completely saturated and sealed vessel or system successful converts load-generated work into pressure, which is used by the system to be applied to actuators in order to use the energy available in the system more efficiently. The conversion of the load-generated work into pressure results from the constant dynamic volume pressured by the load and the source through a concave differential of areas.

### BRIEF DESCRIPTION OF THE FIGURES

Figure 1 depicts the general diagram of the hydraulic system of this invention, with the positions of the plungers and the valves being random.
Figure 2 depicts the geometric figure of the covers (37), (38), (39) and (40) of this invention and the anti-cavitation plates (41).
Figure 3 depicts the plungers (11) and (20), their cavities (42), (43), (44) and (45), membranes (30), (31), (32) and (33), covers (46), (47), (48) and (49), nitrogen supply holes (50), (51), (52) and (53) and purge holes (54), (55), (56) and (57).
Figure 4 depicts the position of the inner reel (61) of the 4-way directional valve (7), being random as in Figure 1.
Figure 5 depicts the position of the inner reel (62) of the 4-way directional valve (17), being random as in Figure 1.
Figure 6 depicts the system after having performed a directional change in the plunger (11), taking into account the random initial position of the system depicted in Figure 1, this being after the blocked ports of the valves (7) are unblocked and the unblocked ports of the valve (7) are blocked.

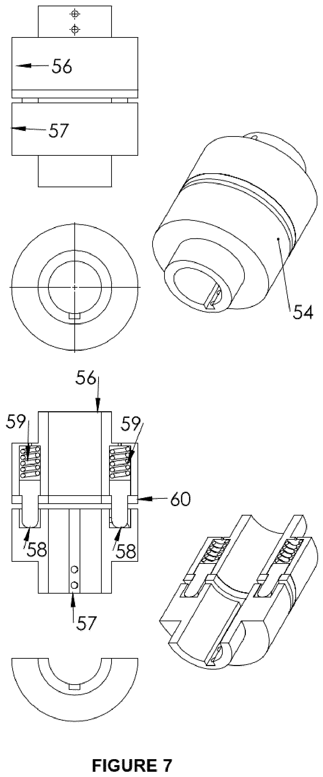

Figure 7 depicts the mechanical unidirectional drive coupling (54) which will be used to protect the system in case of a sudden emergency shutdown, in which the parts thereof are shown; a male part (56), a female part (57), drive bolts (58), springs (59) and the safety plate (60).
Figure 8 depicts the system after having performed a directional change in the plunger (20), taking into account the random initial position of the system depicted in Figure 1, this being after the blocked ports of the valves (17) are unblocked and the unblocked ports of the valve (17) are blocked.

### DETAILED DESCRIPTION OF THE INVENTION

The operation of the hydraulic power boosting system is described in detail below.

First, it is important to mention that the hydraulic system, due to its features, must be completely saturated with liquid fluid and purged before starting.

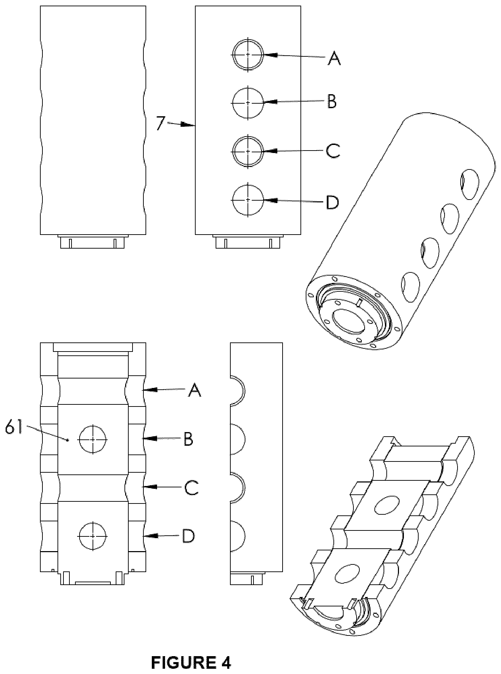

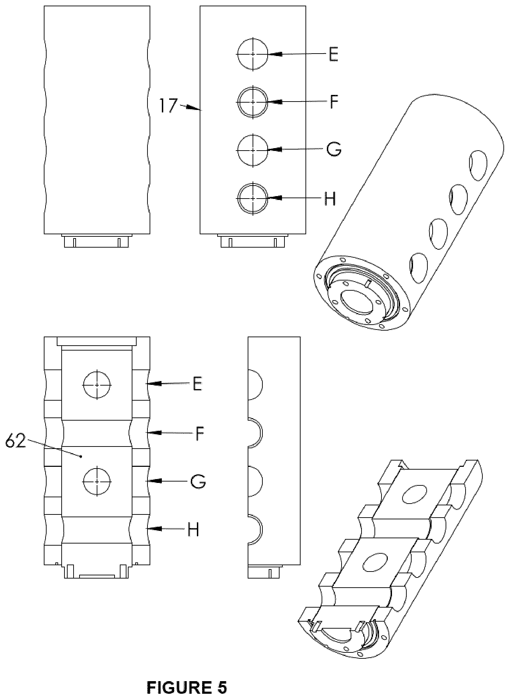

This system has an external energy source that powers the electric motor such that when the starter thereof is energized, the electric motor (1) converts electrical energy into angular mechanical energy that actuates the hydraulic pump (2) which is mechanically connected to the electric motor (1) of the system of the first block. Upon actuation, the hydraulic pump (2) begins the suction of fluid through its absorption port from the tank (3) and at this time it begins to displace the volume that feeds the system and it is at this time that one of the two fundamental conditions that give form to a hydraulic system, such as volume displacement, takes place. There is connected to the outlet port of the hydraulic pump (2) the manifold (4) from which feed lines (5) and (6) emerge, the fluid is conducted through said lines to the first 4-way valve (7), the feed line (5) is connected to port C of the 4-way directional valve (7) and the feed line (6) is connected to port B of the 4-way directional valve (7), see the position of the reel (61) in Figure 4. From the rear port C in the 4-way directional valve (7), the feed line (5) is connected to one side of the right cover (37) of the booster or cylinder (8) and there is connected to the outlet of the right cover (37) of the booster or cylinder (8) the working line (10), which is connected to port D of the 4-way directional valve (7), it should be noted that in the position of the reel (61) of the 4-way directional valve (7) ports A and C are unblocked, whereas ports B and D are blocked. The feed line (6) connecting with the left cover (38) of the booster or cylinder (8) continues through the rear port B of the 4-way directional valve (7), from the outlet port of the left cover (38) of the booster or cylinder (8) the working line (9) is connected to the rear port A of the 4-way directional valve (7). The fluid is conducted through the feed line (5) to the inside of the right side of the booster or cylinder (8) through the right cover (37) to start displacing the plunger (11) towards the left side of the cylinder or booster (8) that is inside the booster or cylinder (8) and at the same time displace the fluid located inside the booster or cylinder (8) on the left side after the plunger (11), so the fluid displaced by the plunger (11) is conducted to the output port of the left cover (38) of the booster or cylinder (8) to be conducted by the working line (9) through port A of the 4-way directional valve (7), the working line (9) connecting with the manifold (12) continues from the rear port A. While it should be noted that the working line (10) is temporarily blocked by the position of the reel (61) of the 4-way directional valve (7), said working line (10) continues to the inlet port of the manifold (12), which is directly connected to the inlet port of the hydraulic motor or angular actuator (13) through which passes the flow displaced by the plunger (11) which is inside the booster or cylinder (8), when the fluid passes through the hydraulic motor (13), it converts hydraulic energy into angular mechanical energy ready for conversion, at this time the hydraulic motor (13) acts as a load in the hydraulic system, manifesting pressure and fulfilling the second condition of the hydraulic circuits. There is directly connected to the outlet port of the hydraulic motor (13) the manifold (14) from which feed lines (15) and (16) connecting with the 4-way directional valve (17) emerge. The feed line (15) connects to port G of the 4-way directional valve (17) and the feed line (16) connects with port F of the 4-way directional valve (17). The position of the reel (62) of the 4-way directional valve (17) has been randomly taken, wherein ports E and G are temporarily blocked and ports F and H are temporarily unblocked of the 4-way directional valve (17), see figure 5. The feed line (16) for connecting with the side cover on the left side (39) of the booster or cylinder (18) continues after port F of the 4-way directional valve (17), there is connected to the outlet of the right cover (40) of the booster or cylinder (18) the working line (19) connecting with port H of the 4-way directional valve (17), the feed line (15) connecting with the right side cover (40) of the booster or cylinder (18) continues from the rear port G of the 4-way directional valve (17) and there is connected to the output port of the left cover (39) of the booster or cylinder (18) the working line (19) connecting with port H of the 4-way directional valve (17). The remaining fluid displaced by the plunger (11) is conducted through the feed line (16) to the port of the left cover (39) of the booster or cylinder (18) to begin displacing the plunger (20) to the right side (40) of the booster or cylinder (18) and at the same time displace the fluid located on the rear face of the plunger (20). The fluid displaced by the plunger (20) is conducted to the outlet port of the right cover (40) of the booster or cylinder (18) which connects with the working line (19), conducting the fluid through the 4-way directional valve (17) through port H connecting with the continuation of the working line (19) until the manifold (22) which is directly connected to the inlet port of the hydraulic motor or angular displacement actuator (23). The fluid passes through the hydraulic motor (23) which converts hydraulic energy into angular mechanical energy, the fluid is conducted through the outlet port of the hydraulic motor (23) to discharge into a manifold (24) directly connected to a cooling system (25) to return the fluid to the tank (3) with the suitable temperature to be used again in the next cycles.

This description of a random state of the system can be seen in Figure 1, where the direction of the plungers does not depend on one another.

It should be noted that in Figure 1 the plunger (11) of the cylinder or booster (8) will first reach its limit marked by the inductive proximity sensor (26) before the plunger (20) of the booster or cylinder (18), without affecting the operation of the system in any way.

Once the plunger (11) of the booster or cylinder (8) has activated the output of the inductive proximity sensor (26), this will send a signal to the control system so that the servomotor (34) rotates and causes the reel (61) to rotate, producing a directional change, which consists of blocking ports A and C of the directional valve (7) and unlocking ports B and D of the directional valve (7).

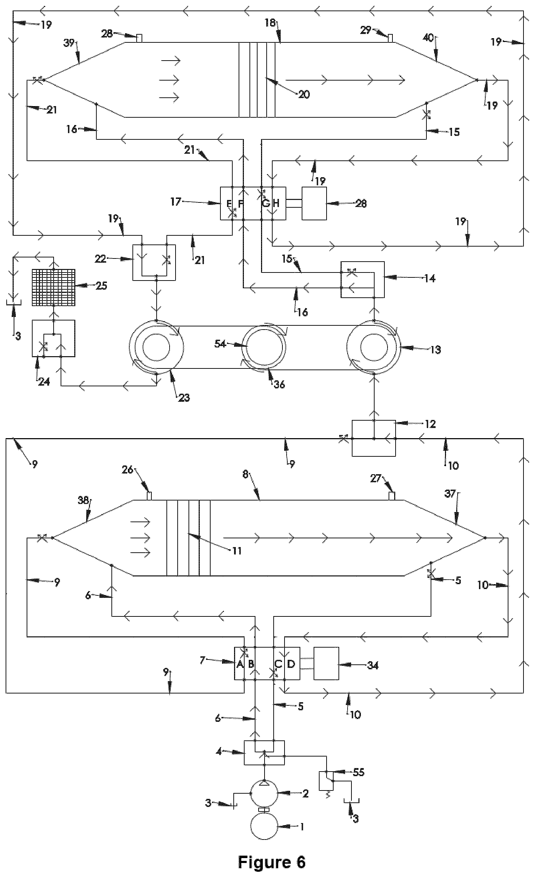

After the aforementioned directional change, the plunger (11) is now displaced from left to right as shown in Figure 6. At this time, the plunger (20) has not yet reached its limit, so in Figure 6 it still has the same direction as in Figure 1. Both plungers displacing in the same direction.

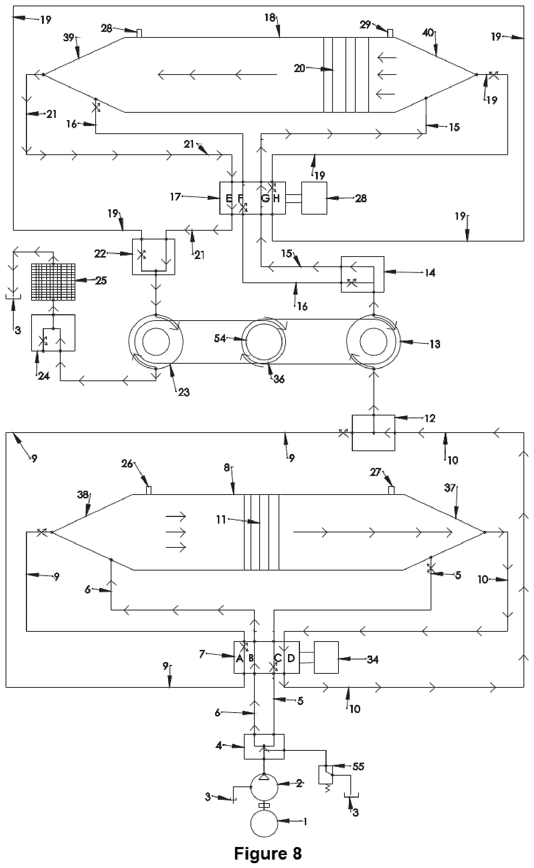

Once the plunger (20) of the booster or cylinder (18) has activated the output of the inductive proximity sensor (29), this will send a signal to the control system so that the servomotor (28) rotates and causes the reel (62) to rotate, producing a directional change, which consists of blocking ports F and H of the 4-way directional valve (17) and unblocking ports E and G of the 4-way directional valve (17), as shown in Figure 8.

It is necessary to mention that the plungers (11) and (20) are displaced independently with respect to one another, which eliminates the directional dependency between them, i.e., the direction of one plunger does not affect the direction of the other in any way.

This is the description of the work cycle of a block. Depending on applications, other blocks can be interconnected in series starting with another hydraulic pump actuated, by means of a transmission, by the 2 hydraulic motors (13) and (23), the new pump will act as a load or work for the first block. Similarly, the motors (13) and (23) can be connected by a transmission (36) to use that energy in the work that is being carried out, whether for generating electrical energy with a generator or for using mechanical energy for physical work.

## Claims

1. A hydraulic power boosting system, **characterised in that** it comprises: a main actuation system; and a directional change system; wherein said main actuation system comprises a main angular power-generating motor, a pump connected to said motor and to a fluid tank, which suctions said fluid and smoothly displaces it; a power generator and booster to provide fluid at a first pressure comprising; a first booster or cylinder having therein: a plunger that is linearly displaced from an initial position to a final position and a limit sensor at each end of said piston; a 4-way directional valve connected to both ends of the piston, which restricts or allows the passage of the fluid into or out of the piston; feeding a first hydraulic motor with a second pressure, having the function of converting the hydraulic energy from the first booster or cylinder into angular mechanical energy to carry out work, with a residual pressure being obtained from the outlet of the first hydraulic motor, this residual pressure being considered as the third pressure, and the same volume, which are conducted through the working lines until connecting with the second 4-way directional valve that in turn restricts the inlets and outlets of a second booster or cylinder; said second booster or cylinder comprises therein: a plunger that is linearly displaced from an initial position to a final position and a limit sensor at each end of said piston; a 4-way directional valve connected to both ends of the second booster or cylinder, which restricts or allows the passage of the fluid into or out of the plunger, wherein said second piston increases the third pressure of the fluid to obtain a fourth pressure; a second hydraulic motor, connected in fluid communication with said 4-way directional valve, which receives the fluid with the fourth pressure in order to convert it into angular mechanical energy to carry out work; fluid cooling means, which cool the fluid from the hydraulic motors in order to send it to the fluid tank and to enable starting a new cycle indefinitely.

2. The hydraulic power boosting system according to claim 1, further **characterised in that** the power-generating motor is an electric motor.

3. The hydraulic power boosting system according to claim 1, further **characterised in that** the power-generating motor is an internal combustion engine.

4. The hydraulic power boosting system according to claim 1, further **characterised in that** the power-generating element is a wind-powered generator.

5. The hydraulic power boosting system according to claim 1, further **characterised in that** the power-generating element is a turbine.

6. The hydraulic power boosting system according to claim 1, further **characterised in that** the power-generating element is moving water.

7. The hydraulic power boosting system according to claim 1, further **characterised in that** the plungers are displaced independently with respect to one another by eliminating dependency between the plungers.

8. The hydraulic power boosting system according to claim 1, further **characterised in that** the position of the cylinders does not interfere with the operation thereof.

9. The hydraulic power boosting system according to claim 1, further **characterised in that** there are connected at the outlets of each booster or cylinder actuators which convert the hydraulic energy derived from each booster or cylinder into angular mechanical energy. Said hydraulic actuators work independently and the work thereof is made up of a mechanical transmission converging in a shaft to deliver the sum of the work of both actuators in order to carry out final work.

10. The hydraulic power boosting system according to claim 1, further **characterised in that** there is located on the front faces of each plunger a cavity for storing nitrogen which is communicated by means of 4 side openings through which said cavity is purged and filled.

11. The hydraulic power boosting system according to claim 1, further **characterised in that** in order to cover said cavity and prevent nitrogen leakage a pressure-resistant membrane is installed and secured to the plunger by means of a cover.

12. The hydraulic power boosting system according to claim 1, further **characterised in that** N number of blocks can be connected according to application needs.

13. The hydraulic power boosting system according to claim 1, further **characterised in that** it only comprises a main hydraulic system and directional changes are performed electromechanically, increasing the efficiency of the system, since energy will only be used at the time of a directional change, also reducing the increase in temperature of the hydraulic fluid, reducing the number of parts used for the directional change system.

14. The directional change system according to claim 13, **characterised in that** it comprises rotationally-operated valves of N number of ways which, in conjunction with the limit sensors of the plungers and the analogue/digital control system, control the fluid inlets and outlets of a cylinder or booster.

15. The hydraulic power boosting system according to claim 1, further **characterised in that** the covers located at the final part of both ends of each booster or cylinder are **characterised by** having a pyramid shape made up of a simple polygon and triangles having a single side which is related to one of the base polygon.

16. The pyramid shape of the covers according to claim 15, further **characterised in that** pyramid shapes of the covers located at the final part of both ends of each booster or cylinder have an angle of inclination of between 1º and 45°.

17. The covers according to claim 15, **characterised in that** there is located inside and along the pyramid an anti-cavitation system, which consists of plates adhered to said pyramidal structure.

18. The hydraulic power boosting system according to claim 1, further **characterised in that** it can be applicable at a different scale by changing the diameters and lengths of the cylinders or boosters.

19. The hydraulic power boosting system according to claim 1, further **characterised in that** it uses a unidirectional drive coupling in the final power takeoff.

20. The unidirectional drive coupling according to claim 19, further **characterised in that** it has helicoidal concave cavities such that the drive pivots transmit torque or force in a single clockwise or counterclockwise direction.

21. The unidirectional drive coupling according to claim 19, further **characterised in that** it protects the electric energy-generating system from an unscheduled emergency shutdown or a sudden and temporary power loss in the system, which will allow the free rotation of the load mainly in alternators that rotate at a high frequency.
